# EUROPÄISCHE PATENTSCHRIFT

(11) **EP 3 448 207 B1**
(45) Veröffentlichungstag und Bekanntmachung des Hinweises auf die Patenterteilung: **26.10.2022**
(21) Anmeldenummer: 17718361.3
(22) Anmeldetag: 19.04.2017
(51) Int. Cl.: C21D 9/02, F16F 1/04, A47C 23/043, A47C 27/06, B21C 51/00, B21F 35/00, B60N 2/70, C21D 8/06, C21D 9/52, C22C 38/02, C22C 38/04, C22C 38/18, C22C 38/40, F16F 1/02

(54) **POLSTERFEDER, VERFAHREN ZUR HERSTELLUNG EINER POLSTERFEDER, MATRATZE UND POLSTERMÖBEL**
UPHOLSTERY SPRING, METHOD FOR PRODUCING AN UPHOLSTERY SPRING, MATTRESS, AND UPHOLSTERED FURNITURE
RESSORT DE MATELASSURE, PROCÉDÉ DE RÉALISATION D'UN RESSORT DE MATELASSURE, MATELAS ET MEUBLE MATELASSÉ

(30) Priorität: 26.04.2016 DE 102016107746
(43) Veröffentlichungstag der Anmeldung: 06.03.2019
(73) Patentinhaber: AGRO Holding GmbH, 49152 Bad Essen (DE)
(72) Erfinder: GROTHAUS, Sabine, 49152 Bad Essen (DE)
(74) Vertreter: Dantz, Jan Henning
(86) Internationale Anmeldenummer: PCT/EP2017/059218
(87) Internationale Veröffentlichungsnummer: WO 2017/186533

(56) Entgegenhaltungen:
- EP-A1- 0 943 697
- EP-A1- 1 801 255
- EP-B1- 3 261 493
- WO-A1-2009/129536
- DE-A1- 19 849 242
- GB-A- 1 209 252

## Beschreibung

Die vorliegende Erfindung betrifft eine Polsterfeder, ein Verfahren zur Herstellung einer Polsterfeder, insbesondere für Polstermöbel oder Matratzen, sowie eine Matratze und ein Polstermöbel.

Die DE 10 2013 103 644 offenbart eine aus Draht bestehende Feder eines Federkerns, die beispielsweise für Matratzen oder Polstermöbel eingesetzt werden kann. Die Feder besteht aus einem schraubenförmig gewundenen Federstahldraht, der sich bei Belastung verformt. Solche Federn haben sich bei der Herstellung von Polstermöbeln und Matratzen bewährt, wobei die Federn bei der Herstellung wärmebehandelt werden, um sie zäher zu machen. Durch eine solche Wärmebehandlung wird ein Absinken von Einzelfedern und daraus folgende Absenkungen, wie Kuhlen in Polstern oder Matratzen, verhindert. Es ist allerdings nur mit viel Aufwand feststellbar, ob eine ausreichende Wärmebehandlung durchgeführt wurde. Für den Endkunden ist eine Überprüfung in der Regel nicht möglich.

Die nachveröffentlichte DE 10 2015 102 539 A1 und EP 3 261 493 B1 offenbaren ein Verfahren zur Herstellung einer Polsterfeder. Die Polsterfeder ist aus einem Federstahldraht gebildet und weist einen Farbindikator auf, welcher anzeigt ob eine ausreichende Wärmebehandlung zur Härtung der Polsterfeder vorgenommen wurde.

Ausgehend von diesem Stand der Technik ist es nunmehr die Aufgabe der vorliegenden Erfindung die Polsterfeder dahingehend zu verbessern, dass die Duktilität der Feder verbessert wird und zugleich ein Anhaften des Farbindikators gewährleistet ist und ein Verfahren zur Herstellung einer solchen Polsterfeder bereitzustellen.

Die Erfindung löst diese Aufgabe durch eine Polsterfeder mit den Merkmalen des Anspruchs 1 und durch ein Verfahren mit den Merkmalen des Anspruchs 3.

Eine erfindungsgemäße Polsterfeder umfasst einen Federstahldraht aus einem mikrolegiertem Stahl und einen zumindest bereichsweise darauf angeordneten Farbindikator, wobei der mikrolegierte Stahl eines oder mehrere Legierungselemente zwischen 0,004 bis 0,015 Gew.% aufweist.

Der Farbindikator ist somit in einer bevorzugten Ausführungsvariante nicht Bestandteil des Materials des Federstahldrahtes sondern der Farbindikator ist auf diesem Federstahldraht aufgebracht.

Mikrolegierte Stähle umfassen zumeist in geringen Gewichtsanteilen Legierungselemente wie Aluminium, Titan, Vanadium oder Niob. Einige dieser Legierungselemente können Karbide oder Nitride ausbilden. Besonders bevorzugt kann es auch zu der sogenannten Kornfeinung kommen, in welcher kleinere und feinere Körner im Gefüge erzeugt werden. Dies geht mit einer Wärmebehandlung einher, durch welche es zur Ausbildung der feineren Körner im Gefüge aufgrund der Kornfeinung kommt.

Diese Kornfeinung des Gefüges kann sich wiederum positiv auf die Zähigkeit und Duktilität des Federstahldrahtes auswirken, was dann in Verbindung zu verbesserten Verformungseigenschaften steht.

Zudem kann die Festigkeit optimiert werden und durch das sichere Abbinden des Stickstoffs an Titan kann es zu einer Verbesserung der Zieheigenschaften kommen.

Überdies hat sich gezeigt, dass eine gute Anbindung des Farbindikators, insbesondere einer kupferhaltigen Beschichtung, auf dem mikrolegierten Stahles möglich ist.

Vorteilhafte Ausführungsvarianten einer erfindungsgemäßen Polsterfeder sind Gegenstand der Unteransprüche.

Erfindungsgemäß besteht der Federstahl aus einem titanmikrolegiertem Stahl mit einem Titananteil zwischen 0,004 bis 0,01 Gew.%, Durch die Zugabe von Titan wird das Gefüge des Federstahldrahtes und das Gefüge des Endproduktes beeinflusst. Gegenüber anderen bekannten Federstahldrähten kann es durch Zugabe von Titan als Legierungselement zur Bildung eines feinkörnigeren Gefüges insbesondere durch Kornfeinung, vorzugsweise im Rahmen einer Wärmebehandlung während der Herstellung des Federstahldrahtes, kommen.

Optimale Ergebnisse wurden erreicht sofern der Titananteil im titanmikrolegieten Stahl zwischen 0,005 bis 0,008 Gew.% beträgt.

Der Farbindikator ist erfindungsgemäß auf dem Federstahldraht als kupferhaltige Beschichtung, insbesondere als Beschichtung bestehend aus Kupfer, aufgebracht. Eine kupferhaltige Beschichtung ist als eine Beschichtung zu verstehen, welche einen gewissen Kupferanteil zu einem gewissen Masseanteil aufweist. Weiterhin Teil der Beschichtung kann z.B. ein Bindemittel sein. Dies kann ein Lack oder im Fall einer Beschichtungslegierung eine Metallmatrix sein. Die kupferhaltige Beschichtung sollte vorteilhaft die mechanischen Eigenschaften der Polsterfeder nicht nachteilig beeinflussen. Die kupferhaltige Beschichtung kann auch im Wesentlichen vollständig aus Kupfer bestehen, das mit einer geringen Schichtdicke auf den Federstahldraht aufgebracht wird. Es ist auch möglich, geeignete Kupferlegierungen einzusetzen, um eine bestimmte Umschlagtemperatur einzustellen. Bei dem Farbumschlag wird dann die kupferfarbige Beschichtung dunkler oder heller, je nach erreichter Temperatur, was optisch gut erkennbar ist.

Der Federstahldraht ist auf Basis eines Stahls für einen Walzdraht zum Ziehen gemäß DIN EN ISO 16120 der Stahlsorte C38(D) bis C70(D) gebildet, welcher zusätzlich mit Titan, in den vorgenannten bevorzugten Konzentrationsbereichen, legiert wurde.

Ein erfindungsgemäßes Verfahren zur Herstellung einer Polsterfeder, insbesondere für Polstermöbel oder Matratzen, umfasst unter anderem den Schritt des Bereitstellens eines gebogenen oder ungebogenen Federstahldrahtes aus mikrolegiertem Stahl, wobei der mikrolegierte Stahl zumindest ein oder mehrere Legierungselemente zwischen 0,001 bis 0,015 Gew.% aufweist. Weiterhin sieht das Verfahren erfindungsgemäß vor, dass zumindest bereichsweise ein hitzeempfindlicher Farbindikator auf einen Federstahldraht vor, beim oder nach dem Biegen des Federstahldrahtes aufgebracht wird, und dann der Federstahldraht auf mindestens die Umschlagtemperatur des Farbindikators erhitzt wird, bevor die Polsterfeder fertiggestellt wird. Es gibt Maschinen, die beim Drahteinzug vor dem Winden der Feder eine Erhitzung durchführen, so dass die Feder heiß gewunden wird. Es gibt aber auch Maschinen, die in einem zweiten Schritt durch Stromeinleitung erhitzen, wobei die Feder schon gewunden ist.

Durch das Aufbringen des hitzeempfindlichen Farbindikators ist gewährleistet, dass die Wärmebehandlung des Federstahldrahtes optisch sichtbar gemacht werden kann. Durch einen entsprechenden Farbumschlag ist es sowohl für den Hersteller von Polstermöbeln und Matratzen als auch für den Endkunden erkennbar, ob eine Wärmebehandlung vorgenommen wurde, die den Federstahldraht zäher macht. Dadurch kann ein wichtiges Qualitätskriterium für Polsterfedern optisch hervorgehoben werden.

Das Bereitstellen des Federstahldrahtes kann vorteilhaft durch eine Mikrolegierung von Federstahl mit Titan und/oder einer Titanverbindung während eines Warmwalzvorgangs umfassen, derart dass durch die Menge des zugegebenen Titans und/oder der zugegebenen Titanverbindung eine Änderung der Feinkörnung des Stahls bei einer anschließenden Abkühlung zu einem Federstahlkörper erfolgt. Die Änderung der Feinkörnung des Stahls bezieht sich dabei auf einen Vergleich gegenüber einem Stahl welcher nicht mit Titan oder einer Titanverbindung mikrolegiert ist. Als Titan ist dabei das elementare Metall zu verstehen. Eine Metallverbindung kann z.B. ein Titansalz, z.B. ein Karbid oder Nitrid, oder eine Titanlegierung sein.

Das Bereitstellen des Federstahldrahtes kann zudem ein Umformen, vorzugsweise bei Temperaturen von weniger als 50°C, durch Ziehen des Federstahlkörpers zu dem Federstahldraht umfassen. Dieses Umformen ist auch als Kaltziehverfahren bekannt.

Im Anschluss an diesen Ziehvorgang kann nunmehr der Farbindikator aufgebracht werden.

Ein Biegen bzw. Winden des Federstahldrahtes in die Form der Polsterfeder kann vor oder nach dem Aufbringen des Farbindikators erfolgen.

Vorzugsweise wird der Federstahldraht auf über 280° C bei der Wärmebehandlung erhitzt. Zur Wärmebehandlung kann der Federstahldraht beispielsweise auf eine Temperatur zwischen 290° C bis 310° C erhitzt werden, wobei die Dauer der Wärmebehandlung abhängig vom verwendeten Federstahldraht gestaltet werden kann, aber zumindest kurzzeitig die Temperatur über 290° C erreicht werden muss. Die Umschlagtemperatur des Farbindikators liegt daher vorzugsweise ebenfalls bei mindestens 250°C, insbesondere zwischen 290°C und 310°C. Bei diesen Temperaturen treten die positiven Effekte durch die Wärmebehandlung auf.

Für eine effektive Herstellung der Polsterfeder kann der Farbindikator durch ein Tauchbad aufgebracht werden. Die Beschichtung kann dabei vorzugsweise rein elektrochemisch oder unter Anlegen einer Spannung galvanisch erfolgen. Der Farbindikator weist vorzugsweise eine Dicke zwischen 0,05 bis 1 µm, insbesondere 0,10 und 0,80 µm, auf, so dass der Farbindikator nur in geringen Mengen auf den Federstahldraht aufgebracht wird.

In einer weiteren Ausgestaltung der Erfindung wird der Farbindikator nur bereichsweise auf den Federstahldraht aufgebracht, was besonders materialsparend ist. Der Farbindikator kann beispielsweise nur auf einen mittleren Bereich der Polsterfeder aufgebracht werden, der sich bei Belastung verformt, so dass durch den Farbindikator zumindest sichtbar wird, ob der sich verformende Bereich wärmebehandelt ist. Dann können die an gegenüberliegenden Seiten angeordneten Endringe einer Polsterfeder unbeschichtet bleiben. Natürlich ist es auch möglich, die Polsterfeder vollständig mit dem Farbindikator zu beschichten.

Erfindungsgemäß wird auch eine Polsterfeder bereitgestellt, die insbesondere bei einer Matratze oder einem Polstermöbel eingesetzt wird. Bei einer Matratze oder Polstermöbel ist es möglich, dass in einem Bezug für die Polsterfeder oder eine Einheit aus mehreren Polsterfedern ein Sichtfenster vorgesehen ist, so dass auch ein Endkunde erkennen kann, ob die Polsterfeder entsprechend wärmebehandelt wurde.

Die Erfindung wird nachfolgend anhand eines Ausführungsbeispiels mit Bezug auf die beigefügten Zeichnungen näher erläutert. Es zeigen:
- Figur 1: eine Ansicht einer Polsterfeder mit einer erfindungsgemäßen Beschichtung eines Farbindikators, vor und nach der Wärmebehandlung, und
- Figur 2: eine herkömmliche Polsterfeder ohne Farbindikator.

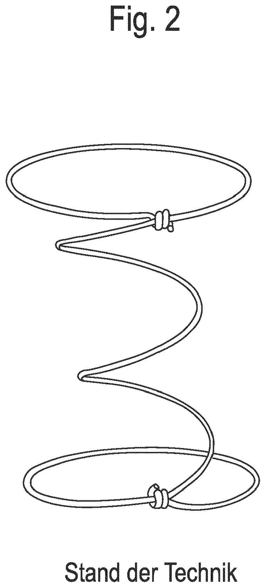

Die Figur 2 zeigt eine Polsterfeder ohne eine Beschichtung aus einem hitzeempfindlichen Farbindikator. Es ist erkennbar, dass der Federstahldraht, aus dem die Polsterfeder hergestellt ist, überall die gleiche Farbe besitzt und optisch nicht erkennbar ist, ob bei dieser Polsterfeder eine Wärmebehandlung durchgeführt wurde, um den Federstahldraht zäher zu machen.

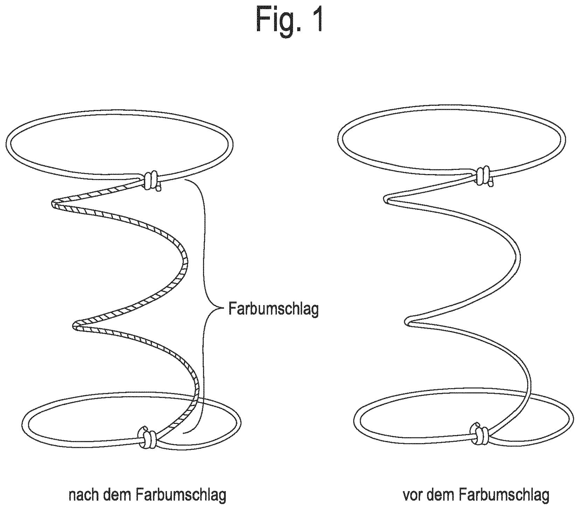

Auf der linken Seite in Figur 1 ist eine Polsterfeder gemäß der vorliegenden Erfindung gezeigt.

Die Polsterfeder weist einen Federstahldraht auf welcher aus einem mikrolegiertem Stahl besteht mit Legierungselementen im Umfang von 0,004 bis 0,015 Gew.%.

Als Legierungselement hat sich Titan erwiesen. Der Titangehalt beträgt 0,004 bis 0,01 Gew.% und optimalerweise 0,005 Gew.% bis 0,008 Gew.%

Der Federstahldraht besteht dabei aus einem Stahl, der auf den Stahl-Güten C38(D) bis C70(D) basiert.

Die Bereitstellung des Drahtes kann derart erfolgen, dass bei dem bereits im Stahlwerk durch Mikrolegierung und einen speziellen Abkühlungsprozess nach dem Warmwalzen die Feinkörnung des Stahls beeinflusst wird. Anders als bei einem nicht-mikrolegierten Federstahldraht kommt es hier zu einer Ausbildung einer Kornfeinung. Es wird zunächst ein Federstahlkörper gebildet, welcher im Anschluss, z.B. im Rahmen einer Kaltumformung, durch Ziehen zu einem Federstahldraht ausgebildet werden kann.

Anschließend kann ein Beschichten mit einem Farbindikator erfolgen, welches im Detail nachfolgend beschrieben wird.

Die Polsterfeder ist in einem mittleren Bereich zwischen zwei parallel angeordneten Endringen schraubenförmig gewunden und in diesem mittleren Bereich mit einem hitzeempfindlichen Farbindikator beschichtet. Wie der Ansicht zu entnehmen ist, besitzt der mittlere Bereich eine andere Farbe als die beiden unbeschichteten Endringe der Polsterfeder. Der mittlere Bereich ist deutlich dunkler, was an dem Farbumschlag des hitzeempfindlichen Farbindikators aufgrund einer Wärmebehandlung liegt. Auf der rechten Seite ist eine Polsterfeder mit Farbindikator und ohne Wärmebehandlung abgebildet. Deutlich ist zu sehen, dass die Farbe einheitlich ist. Als hitzeempfindlicher Farbindikator wurde auf den mittleren Bereich eine kupferhaltige Beschichtung in einer Dicke zwischen 0,15 µm bis 0,75 µm elektrochemisch auf den Draht aufgebracht. Hierfür wurde der Draht durch ein Tauchbad geleitet und dabei eine Spannung an den Federstahldraht angelegt, so dass die kupferhaltige Beschichtung sich an der Oberfläche abgesetzt hat. Durch dieses Verfahren lassen sich die Schichtdicke und die beschichteten Bereiche vergleichsweise exakt einstellen.

Der Farbindikator kann dabei auf den noch unverformten Federstahldraht aufgebracht werden, so dass dieser erst nach der Beschichtung in die Form einer Polsterfeder verformt wird. Vorzugsweise wird dann eine vollständige Beschichtung vorgenommen. Es ist aber auch möglich, zuerst den Federstahldraht zu einer Polsterfeder zu formen und den schon geformten Federstahldraht zumindest teilweise zu beschichten.

Nach dem Aufbringen des Farbindikators wurde der gebogene Federstahldraht einer Wärmebehandlung unterzogen, wobei der gebogene Federstahldraht auf eine Temperatur zwischen 280° C bis 320° C erhitzt wurde. Durch das Erhitzen auf diese Temperatur wurde der Farbindikator aktiviert, so dass ein optisch erkennbarer Farbumschlag in dem mittleren Bereich vorgenommen wurde.

In dem dargestellten Ausführungsbeispiel ist nur der mittlere Bereich einer Polsterfeder mit einem Farbindikator beschichtet, wobei es auch möglich ist, den Farbindikator vollständig auf die Polsterfeder aufzubringen. Durch das bereichsweise Beschichten des Farbindikators ist es allerdings einfacher, den Farbumschlag durch die Wärmebehandlung optisch zu erkennen. Zudem ist es möglich, die Beschichtung nur in dem Bereich der Polsterfeder vorzusehen, der sich bei Belastung verformt, also insbesondere der Bereich zwischen den beiden Endringen.

Die Polsterfeder kann zu unterschiedlichen Federtypen gebogen sein. So kann die Polsterfeder als Bonellfeder, Taschenfeder, Open Coil oder von einem anderen Federtyp ausgebildet sein. Die Polsterfedern können auch zu Einheiten aus mehreren Polsterfedern zusammengefasst werden und dann in Matratzen oder Polstermöbeln verarbeitet werden.

Damit der Endkunde überprüfen kann, ob hochwertige Polsterfedern in der Matratze oder dem Polstermöbel eingesetzt wurden, kann in dem Bezug mindestens ein transparentes oder durch eine Aussparung gebildetes Sichtfenster vorgesehen sein, so dass eine optische Überprüfung möglich ist, ob die Polsterfeder wärmebehandelt ist.

Nach dem Aufbringen des Farbindikators kann ein Winden bzw. Biegen der Polsterfeder aus dem Federstahldraht erfolgen.

Im Anschluss kann die fertige Polsterfeder optional in Stofftaschen z.B. einer Matratze oder eines Polstermöbels eingetascht werden.

Schließlich kann ein Verbinden der Polsterfedern oder Stofftaschen zu Federkernen erfolgen und ein Einbau derselben in einem Bett oder Polstermöbel.

Durch die Zugabe von Titan ist auch ein Einfluss auf das Gefüge des warmgewalzten Federstahlkörpers, des Federstahldrahtes und auch auf das Gefüge des Endproduktes zu erwarten, da hierdurch in der Regel ein feinkörnigeres Gefüge gebildet wird.

Dieser als Kornfeinung bekannter Effekt kann sich positiv auf die Zähigkeit und Duktilität des Federstahldrahtes der Polsterfeder auswirken, was dann in Verbindung zu verbesserten Verformungseigenschaften steht.

Zudem ist dadurch häufig ein Einfluss auf die Festigkeit zu beobachten und durch das sichere Abbinden des Stickstoffs an Titan könnten sich die Zieheigenschaften verbessern, sodass die Bearbeitbarkeit bei der Kaltumformung zur Bereitstellung des Federstahldrahtes verbessert werden kann.

Dabei hat insbesondere eine Titanmikrolegierung einen positiven Einfluss auf die Materialeigenschaften des Federstahldrahtes.

So führt seine hohe Affinität zu Stickstoff zu dessen Abbindung, was die Alterungsbeständigkeit des Federstahls erhöht. Es kann somit auch der Setzverlust von Polsterfedern reduziert werden.

Weiterhin haben die feinen Ti-Ausscheidungen eine kornfeinende Wirkung was sich positiv auf die Duktilität des Stahls auswirkt, was wiederum Vorteile bei der Herstellung der Polsterfeder hat.

## Patentansprüche

1. Polsterfeder umfassend einen Federstahldraht aus einem mikrolegiertem Stahl und einen zumindest bereichsweise darauf angeordneten Farbindikator, wobei der mikrolegierte Stahl eines oder mehrere Legierungs-elemente zwischen 0,004 bis 0,015 Gew.% aufweist, wobei
- der Federstahl aus einem titanmikrolegiertem Stahl mit einem Titananteil zwischen 0,004 bis 0,01 Gew.% besteht,
- der Farbindikator auf dem Federstahldraht als kupferhaltige Beschichtung, insbesondere als Beschichtung bestehend aus Kupfer, aufgebracht ist, und
- der Stahl auf einem Stahl der Stahlsorte C38(D) bis C70(D) gemäß DIN EN ISO 16120 basiert und zusätzlich Titan als Legierungselement aufweist.

2. Polsterfeder nach Anspruch 1, **dadurch gekennzeichnet, dass** der Federstahl aus einem titanmikrolegiertem Stahl mit einem Titananteil zwischen 0,005 bis 0,008 Gew.% besteht.

3. Verfahren zur Herstellung einer Polsterfeder nach Anspruch 1 oder 2, insbesondere für Polstermöbel oder Matratzen, mit zumindest den folgenden Schritten:
- Bereitstellen eines gebogenen oder ungebogenen Federstahldrahtes aus einem einen Titananteil zwischen 0,004 bis 0,01 Gew.% aufweisenden mikrolegierten Stahl;
- zumindest bereichsweises Aufbringen eines hitzeempfindlichen Farbindikators auf einen Federstahldraht als kupferhaltige Beschichtung, insbesondere als Beschichtung bestehend aus Kupfer, vor, beim oder nach einem Biegen des Federstahldrahtes;
- Erhitzen des Federstahldrahtes auf mindestens die Umschlagtemperatur des Farbindikators, und
- Fertigstellen der Polsterfeder.

4. Verfahren nach Anspruch 3, **dadurch gekennzeichnet, dass** das Bereitstellen des Federstahldrahtes ein Umformen, vorzugsweise bei Temperaturen von weniger als 50°C, durch Ziehen des Federstahlkörpers zu dem Federstahldraht umfasst.

5. Verfahren nach Anspruch 3 oder 4, **dadurch gekennzeichnet, dass** der Federstahldraht nach dem Bereitstellen des gebogenen oder ungebogenen Federstahldrahtes und nach dem zumindest bereichsweisen Aufbringen des hitzeempfindlichen Farbindikators für eine Wärmebehandlung und ein Aktivieren des Farbindikators auf über 250° C erhitzt, vorzugsweise auf eine Temperatur zwischen 280° C bis 320° C, erhitzt wird.

6. Verfahren nach einem der vorhergehenden Ansprüche 3 bis 5, **dadurch gekennzeichnet, dass** der Farbindikator mit einer Dicke zwischen 0,05 µm bis 1,5 µm, insbesondere 0,10 µm und 0,80 µm aufgebracht wird.

7. Verfahren nach einem der vorhergehenden Ansprüche 3 bis 6, **dadurch gekennzeichnet, dass** der Farbindikator nur bereichsweise, insbesondere auf einen mittleren Bereich der Polsterfeder, auf den Federstahldraht aufgebracht wird.

8. Polstermöbel oder Matratze mit einer Polsterfeder nach Anspruch 1 oder 2.

9. Polstermöbel oder Matratze nach Anspruch 8, **dadurch gekennzeichnet, dass** an einem Bezug für die Polsterfeder oder eine Einheit aus mehreren Polsterfedern ein Sichtfenster vorgesehen ist.

## Claims

1. An upholstery spring comprising a spring steel wire made of a microalloyed steel and a color indicator arranged in at least some regions thereon, wherein the microalloyed steel has one or more alloy elements between 0.004 and 0.015 wt.%, wherein the spring steel consists of a titanium-microalloyed steel having a titanium proportion between 0.004 and 0.01 wt.%, wherein the color indicator is applied to the spring steel wire as a copper-containing coating, in particular as a coating consisting of copper and wherein the steel is based on a steel of the steel types C38(D) to C70(D) according to DIN EN ISO 16120 and additionally has titanium as an alloy element.

2. The upholstery spring according to Claim 1, **characterized in that** the spring steel consists of a titanium-microalloyed steel having a titanium proportion between 0.005 and 0.008 wt.%.

3. A method for producing an upholstery spring according to Claim 1 or 2, in particular for upholstered furniture or mattresses, having at least the following steps:
- providing a bent or unbent spring steel wire made of microalloyed steel having a titanium proportion between 0.004 and 0.01 wt.%;
- applying a heat-sensitive color indicator made as a copper-containing coating, in particular as a coating consisting of copper, in at least some regions to a spring steel wire before, during, or after a bending of the spring steel wire;
- heating of the spring steel wire to at least the changeover temperature of the color indicator; and
- finishing the upholstery spring.

4. The method according to Claim 3, **characterized in that** the provision of the spring steel wire comprises forming, preferably at temperatures of less than 50°C, by drawing the spring steel body to form the spring steel wire.

5. The method according to Claim 3 or 4 **characterized in that** the spring steel wire, after the provision of the bent or unbent spring steel wire and after the application in at least some regions of the heat-sensitive color indicator, is heated to greater than 250°C, preferably to a temperature between 280°C and 320°C, for a heat treatment and an activation of the color indicator.

6. The method according to any one of preceding Claims 3 to 5, **characterized in that** the color indicator is applied with a thickness between 0.05 µm and 1.5 µm, in particular 0.10 µm and 0.80 µm.

7. The method according to any one of preceding Claims 3 to 6, **characterized in that** the color indicator is applied to the spring steel wire only in some regions, in particular to a middle region of the upholstery spring.

8. Upholstered furniture or mattress having an upholstery spring according to any one of Claims 1 or 2.

9. Upholstered furniture or mattress according to Claim 8, **characterized in that** a viewing window is provided on a cover for the upholstery spring or a unit made of multiple upholstery springs.

## Revendications

1. Ressort de tapissier comprenant un fil d'acier à ressorts fait d'un acier micro-allié et un indicateur coloré disposé au moins par zones sur celui-ci, dans lequel l'acier micro-allié comprend un ou plusieurs éléments d'alliage dans une proportion de 0,004 à 0,015 % en poids,
- l'acier à ressorts se composant d'un acier micro-allié avec du titane dans une proportion de 0,004 à 0,01 % en poids,
- l'indicateur coloré étant appliqué sur le fil d'acier à ressorts sous la forme d'un revêtement contenant du cuivre, en particulier d'un revêtement composé de cuivre et
- l'acier étant à base de la nuance d'acier C38(D) à C70(D) selon DIN EN ISO 16120 et contenant en outre du titane comme élément de l'alliage.

2. Ressort de tapissier selon la revendication 1, **caractérisé en ce que** l'acier à ressorts se compose d'un acier micro-allié avec du titane avec une proportion de titane comprise entre 0,005 et 0,008 % en poids.

3. Procédé pour la fabrication d'un ressort de tapissier selon la revendication 1 ou 2, en particulier pour des meubles rembourrés ou des matelas, comprenant au moins les étapes suivantes :
- préparation d'un fil d'acier à ressorts cintré ou non cintré, fait d'un acier micro-allié contenant entre 0,004 et 0,1 % en poids de titane ;
- application, au moins par zones, d'un indicateur coloré thermosensible sur un fil d'acier à ressorts sous la forme d'un revêtement contenant du cuivre, en particulier d'un revêtement composé de cuivre, lors du cintrage du fil d'acier à ressorts ou après celui-ci ;
- chauffage du fil d'acier à ressorts jusqu'à la température de virage de l'indicateur coloré au minimum et
- finition du ressort tapissier.

4. Procédé selon la revendication 3, **caractérisé en ce que** la préparation du fil d'acier à ressorts comprend une déformation, de préférence à des températures de moins de 50 °C, par tréfilage du bloc d'acier à ressorts pour former le fil d'acier à ressorts.

5. Procédé selon la revendication 3 ou 4, **caractérisé en ce que**, après la préparation du fil d'acier à ressorts cintré ou non cintré et après l'application au moins par zones de l'indicateur coloré thermosensible, le fil d'acier à ressorts est chauffé à plus de 250 °C, de préférence à une température comprise entre 280 °C et 320 °C, en vue d'un traitement thermique et pour activer l'indicateur coloré.

6. Procédé selon l'une des revendications 3 à 5, **caractérisé en ce que** l'indicateur coloré est appliqué sur une épaisseur comprise entre 0,05 µm et 1,5 µm, en particulier entre 0,10 µm et 0,80 µm.

7. Procédé selon l'une des revendications 3 à 6, **caractérisé en ce que** l'indicateur coloré n'est appliqué que par zones sur le fil d'acier à ressorts, en particulier sur une partie médiane du ressort de tapissier.

8. Meuble rembourré ou matelas avec un ressort de tapissier selon la revendication 1 ou 2.

9. Meuble rembourré ou matelas selon la revendication 8, **caractérisé en ce qu'**une fenêtre est prévue dans une housse pour le ressort de tapissier ou pour une unité composée de plusieurs ressorts de tapissier.
